# EUROPEAN PATENT APPLICATION

(11) **EP 4 184 430 A1**
(43) Date of publication of application: **24.05.2023**
(21) Application number: 21843002.3
(22) Date of filing: 15.02.2021
(51) Int. Cl.: G06T 7/00

(54) **IMAGE RECOGNITION DEVICE, IMAGE RECOGNITION METHOD, AND RECOGNITION DICTIONARY GENERATION METHOD**

(30) Priority: 14.07.2020 JP 2020120682
(71) Applicant: JVCKenwood Corporation, Yokohama-shi, Kanagawa 2210022 (JP)
(72) Inventor: OGURA Takuya, Yokohama-shi Kanagawa 221-0022 (JP)
(74) Representative: Carstens, Dirk Wilhelm
(86) International application number: PCT/JP2021/005433
(87) International publication number: WO 2022/014078

(57) **Abstract**

A recognition processor 14 calculates a recognition score indicating a possibility at which a predetermined target object is included in a partial region of a captured picture. In a case where a picture size of the partial region is smaller than a threshold value, the recognition processor 14 calculates a recognition score of the predetermined target object in the partial region using first recognition dictionary data generated by machine learning that sets a picture having a picture size smaller than a predetermined value, as an input picture, and sets a recognition score indicating a possibility at which the predetermined target object is included in an input picture, as an output. In a case where a picture size of the partial region is larger than or equal to the threshold value, the recognition processor 14 calculates a recognition score of the predetermined target object in the partial region using second recognition dictionary data generated by machine learning that sets a picture having a picture size larger than or equal to the predetermined value, as an input picture, and sets a recognition score indicating a possibility at which the predetermined target object is included in an input picture, as an output.

## Description

### [TECHNICAL FIELD]

The present invention relates to a picture recognition device, a picture recognition method, and a recognition dictionary generation method.

### [BACKGROUND ART]

There has been known a technique of detecting a target object such as a pedestrian from a picture obtained by capturing a picture of the periphery of a vehicle, using a picture recognition technique such as pattern matching. For example, there has been proposed a technique of enhancing detection accuracy by generating three pictures including a picture for a short distance, a picture for an intermediate distance, and a picture for a far distance from a captured picture, and performing pattern matching on each of the three pictures using a common recognition dictionary (for example, refer to Patent Literature 1).

### [CITATION LIST]

### [Patent Literature]

[Patent Literature 1] JP2019-211943 A

### [SUMMARY OF INVENTION]

### [TECHNICAL PROBLEM]

A picture size of a region in a captured picture that includes a target object can drastically change mainly depending on a distance to the target object. In a case where a target object is far, a picture size of a region including the target object becomes small, and in a case where a target object is close, a picture size of a region including the target object becomes large. If target objects with different picture sizes are detected using a common recognition dictionary, detection accuracy can decline.

The present invention has been devised in view of the above-described circumstances, and aims to provide a technique of enhancing detection accuracy of a target object in picture recognition processing that is based on a recognition dictionary.

### [SOLUTION TO PROBLEM]

A picture recognition device according to an aspect of the present invention includes a picture acquirer that acquires a captured picture, a recognition processor that calculates a recognition score indicating a possibility at which a predetermined target object is included in a partial region of the captured picture, and a determination processor that determines whether or not the predetermined target object is included in the captured picture, based on the recognition score calculated by the recognition processor, a) In a case where a picture size of the partial region is smaller than a threshold value, the recognition processor calculates a recognition score of the predetermined target object in the partial region using first recognition dictionary data generated by machine learning that sets a picture having a picture size smaller than a predetermined value, as an input picture, and sets a recognition score indicating a possibility at which the predetermined target object is included in an input picture, as an output, and b) in a case where a picture size of the partial region is larger than or equal to the threshold value, the recognition processor calculates a recognition score of the predetermined target object in the partial region using second recognition dictionary data generated by machine learning that sets a picture having a picture size larger than or equal to the predetermined value, as an input picture, and sets a recognition score indicating a possibility at which the predetermined target object is included in an input picture, as an output.

Another aspect of the present invention is a picture recognition method. The method includes acquiring a captured picture, calculating a recognition score indicating a possibility at which a predetermined target object is included in a partial region of the captured picture, and determining whether or not the predetermined target object is included in the captured picture, based on the calculated recognition score. a) In a case where a picture size of the partial region is smaller than a threshold value, the calculating a recognition score calculates a recognition score of the predetermined target object in the partial region using first recognition dictionary data generated by machine learning that sets a picture having a picture size smaller than a predetermined value, as an input picture, and sets a recognition score indicating a possibility at which the predetermined target object is included in an input picture, as an output, and b) in a case where a picture size of the partial region is larger than or equal to the threshold value, the calculating a recognition score calculates a recognition score of the predetermined target object in the partial region using second recognition dictionary data generated by machine learning that sets a picture having a picture size larger than or equal to the predetermined value, as an input picture, and sets a recognition score indicating a possibility at which the predetermined target object is included in an input picture, as an output.

Yet another aspect of the present invention is a recognition dictionary generation method. The method includes generating first recognition dictionary data by machine learning that sets a picture having a picture size smaller than a predetermined value, as an input picture, and sets a recognition score indicating a possibility at which a predetermined target object is included in an input picture, as an output, and generating second recognition dictionary data by machine learning that sets a picture having a picture size larger than or equal to the predetermined value, as an input picture, and sets a recognition score indicating a possibility at which the predetermined target object is included in an input picture, as an output.

### [ADVANTAGEOUS EFFECTS OF INVENTION]

According to the present invention, it is possible to enhance detection accuracy of a target object in picture recognition processing that is based on a recognition dictionary.

### [BRIEF DESCRIPTION OF DRAWINGS]

Fig. 1 is a block diagram schematically illustrating a functional configuration of a picture recognition device according to an embodiment.
Fig. 2 is a diagram illustrating an example of a captured picture acquired by a picture acquirer.
Fig. 3 is a diagram illustrating an example of an output picture generated by an outputter.
Fig. 4 is a diagram schematically illustrating a plurality of converted pictures generated by a picture converter.
Fig. 5 illustrates a table indicating an example of picture sizes of a plurality of converted pictures.
Fig. 6 is a diagram schematically illustrating picture search processing executed by a picture searcher.
Fig. 7A is a diagram schematically illustrating a picture size of an extracted region in a converted picture, and Fig. 7B is a diagram schematically illustrating a picture size of a search region in a captured picture.
Fig. 8 illustrates a table indicating an example of a search condition of picture search processing.
Fig. 9 is a flowchart illustrating a flow of a picture recognition method according to an embodiment.
Figs. 10A to 10D are diagrams illustrating examples of learning pictures.
Fig. 11 is a flowchart illustrating a flow of a recognition dictionary generation method according to an embodiment.

### [DESCRIPTION OF EMBODIMENTS]

Hereinafter, an embodiment of the present invention will be described with reference to the drawings. Specific numerical values and the like that are indicated in the embodiment are mere exemplifications for facilitating the understanding of the invention, and are not intended to limit the present invention unless otherwise specified. Note that, in the drawings, illustration of components not directly-related to the present invention is omitted.

Before the present embodiment is described in detail, an overview will be described. The present embodiment relates to a picture recognition device that determines whether or not a predetermined target object is included in an acquired picture, using recognition dictionary data. The picture recognition device is mounted on a vehicle, for example, and acquires a captured picture of a vehicle front side. The picture recognition device detects a target object such as a pedestrian or a cyclist (bicycling person) based on the acquired picture. The recognition dictionary data is prepared for each type of a target object to be detected. In the present embodiment, a plurality of pieces of recognition dictionary data are prepared for target objects of the same type (for example, pedestrian), and the detection accuracy of a target object is enhanced by using the plurality of pieces of recognition dictionary data depending on the situation.

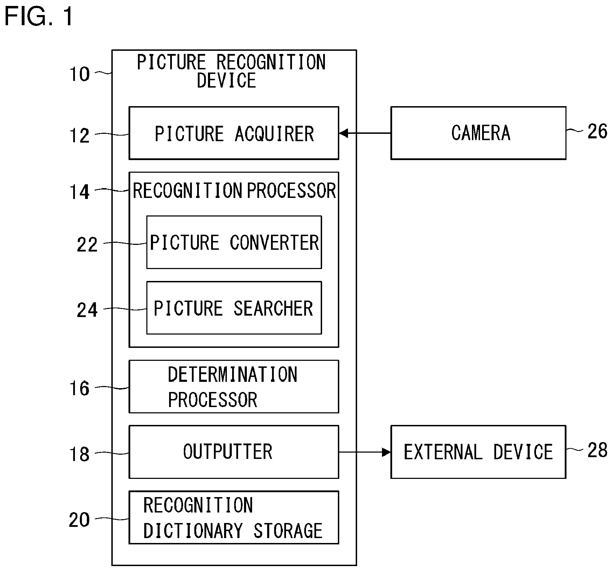

Fig. 1 is a block diagram schematically illustrating a functional configuration of a picture recognition device 10 according to an embodiment. The picture recognition device 10 includes a picture acquirer 12, a recognition processor 14, a determination processor 16, an outputter 18, and a recognition dictionary storage 20. In the present embodiment, a case where the picture recognition device 10 is mounted on a vehicle is exemplified.

Each functional block described in the present embodiment can be implemented by an element or a mechanical device including a central processing unit (CPU) or a memory of a computer, from a hardware aspect, and is implemented by a computer program from a software aspect. In this example, each functional block is illustrated as a functional block implemented by cooperation of these. The one skilled in the art accordingly understands that these functional blocks can be implemented in various forms depending on a combination of hardware and software.

The picture acquirer 12 acquires a captured picture captured by a camera 26. The camera 26 is mounted on a vehicle, and captures a picture of the periphery of a vehicle. The camera 26 captures a picture of the front side of the vehicle, for example. The camera 26 may capture a picture of the rear side of the vehicle, and may capture a picture of the side of the vehicle. The picture recognition device 10 may include the camera 26, and needs not include the camera 26.

The camera 26 is structured to capture a picture of infrared light emitted around the vehicle. The camera 26 is a so-called infrared thermography, and enables identification of a heat source existing around the vehicle, by making a picture of a temperature distribution around the vehicle. The camera 26 may be structured to detect middle infrared light with a wavelength of about 2 um to 5 µm, or may be structured to detect far infrared light with a wavelength of about 8 um to 14 um. Note that the camera 26 may be structured to capture a picture of visible light. The camera 26 may be structured to capture a color picture such as red, green, and blue pictures, or may be structured to capture a monochrome picture of visible light.

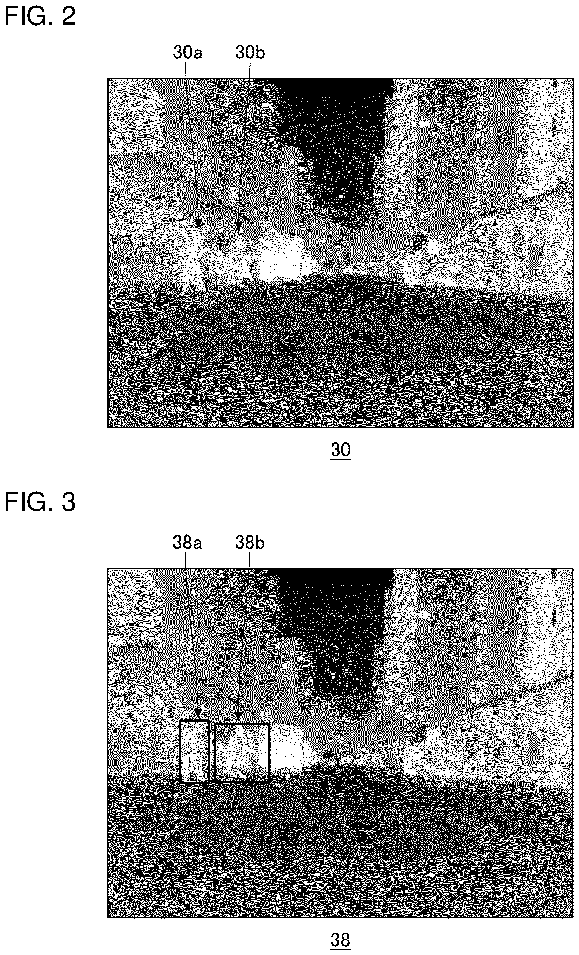

Fig. 2 illustrates an example of a captured picture 30 to be acquired by the picture acquirer 12. Fig. 2 illustrates a picture obtained when an infrared camera captures a picture of the front side of a vehicle stopped at an intersection, and the captured picture 30 includes a pedestrian 30a and a cyclist 30b crossing at a crosswalk existing in front of the vehicle.

The recognition processor 14 calculates a recognition score indicating a possibility at which a predetermined target object is included in a partial region of a captured picture acquired by the picture acquirer 12. The recognition processor 14 identifies a region including the pedestrian 30a in Fig. 2, for example, and calculates a recognition score indicating a possibility at which a pedestrian is included in the identified region. The recognition score is calculated within a range from 0 to 1, for example, and becomes a larger numerical value (i.e., a value closer to 1) as a possibility at which a predetermined target object is included in a partial region becomes higher, and becomes a smaller numerical value (i.e., a value closer to 0) as a possibility at which a predetermined target object is included in a partial region becomes lower.

The determination processor 16 determines whether or not a predetermined target object is included in the captured picture 30, based on a recognition score calculated by the recognition processor 14. For example, in a case where a recognition score calculated by the recognition processor 14 is larger than or equal to a predetermined reference value, the determination processor 16 determines that the predetermined target object exists in a region that has a recognition score larger than or equal to the reference value. Note that, in a case where there is no region that has a recognition score larger than or equal to the reference value, the determination processor 16 determines that the predetermined target object does not exist.

The outputter 18 outputs information that is based on a determination result of the determination processor 16. In a case where the determination processor 16 determines that the predetermined target object exists, the outputter 18 generates an output picture to which a frame adding emphasis to the detected target object is added. An output picture generated by the outputter 18 is displayed on an external device 28 such as a display. In a case where the determination processor 16 determines that the predetermined target object exists, the outputter 18 may generate warning tone. The warning tone generated by the outputter 18 is output from the external device 28 such as a speaker. The picture recognition device 10 may include the external device 28, and needs not include the external device 28.

Fig. 3 is a diagram illustrating an example of an output picture 38 generated by the outputter 18. The output picture 38 is a picture obtained by overlaying detection frames 38a and 38b on the captured picture 30. The first detection frame 38a in the output picture 38 is overlaid onto a position in the captured picture 30 that corresponds to the pedestrian 30a. The second detection frame 38b in the output picture 38 is overlaid onto a position in the captured picture 30 that corresponds to the cyclist 30b.

The recognition dictionary storage 20 stores recognition dictionary data to be used when the recognition processor 14 calculates a recognition score. The recognition dictionary storage 20 stores a plurality of types of recognition dictionary data corresponding to the types of target objects. For example, the recognition dictionary storage 20 stores recognition dictionary data for pedestrians, recognition dictionary data for cyclists, recognition dictionary data for animals, recognition dictionary data for vehicles, and the like. The recognition dictionary data is generated by machine learning that uses a model that sets a picture as an input, and sets a recognition score as an output. As a model used in machine learning, a convolutional neural network (CNN) or the like can be used.

The recognition processor 14 includes a picture converter 22 and a picture searcher 24. The picture converter 22 converts a picture size of the captured picture 30 acquired by the picture acquirer 12, and generates a plurality of converted pictures with different picture sizes. The picture searcher 24 extracts a partial region of a converted picture generated by the picture converter 22, and calculates a recognition score indicating a possibility at which a predetermined target object is included in the extracted region. The picture searcher 24 searches for a region with a high recognition score by sequentially calculating recognition scores while varying a position of an extracted region. By searching for a plurality of converted pictures with different picture sizes, it becomes possible to detect target objects with different dimensions that are included in the captured picture 30.

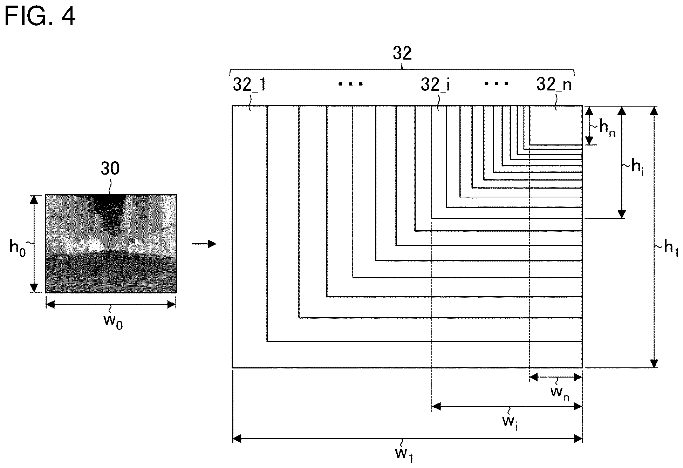

Fig. 4 is a diagram schematically illustrating a plurality of converted pictures 32 generated by the picture converter 22. The picture converter 22 generates, from the captured picture 30, n converted pictures 32 (32_1,..., 32_i,..., and 32_n), which are a plurality of converted pictures. The plurality of converted pictures 32 is generated by enlarging or reducing a picture size of the captured picture 30, which serves as an original picture. The plurality of converted pictures 32 is sometimes referred to as a "picture pyramid" hierarchized in such a manner as to have a pyramid structure.

In this specification, a "picture size" can be defined by the numbers of pixels in a vertical direction and a horizontal direction of a picture. For example, a first converted picture 32_1 is generated by enlarging the captured picture 30 at a first conversion magnification ratio k₁. When a picture size in the vertical direction of the captured picture 30 is denoted by h₀, a picture size h₁ in the vertical direction of the first converted picture 32_1 is represented by h₁ = k₁*h₀. Similarly, when a picture size in the horizontal direction of the captured picture 30 is denoted by w₀, a picture size w₁ in the horizontal direction of the first converted picture 32_1 is represented by w₁ = k₁*w₀. In addition, an n-th converted picture 32_n is generated by reducing the captured picture 30 at an n-th conversion magnification ratio kₙ. Picture sizes hₙ and wₙ in the vertical direction and the horizontal direction of the n-th converted picture 32_n are represented by hₙ = kₙ*h₀ and wₙ = kₙ*w₀. The plurality of converted pictures 32 are different from each other in picture sizes hᵢ and wᵢ in the vertical direction and the horizontal direction, and a conversion magnification ratio kᵢ (i = 1 to n). Note that the plurality of converted pictures 32 has a common ratio (aspect ratio) hᵢ : wᵢ of picture sizes in the vertical direction and the horizontal direction.

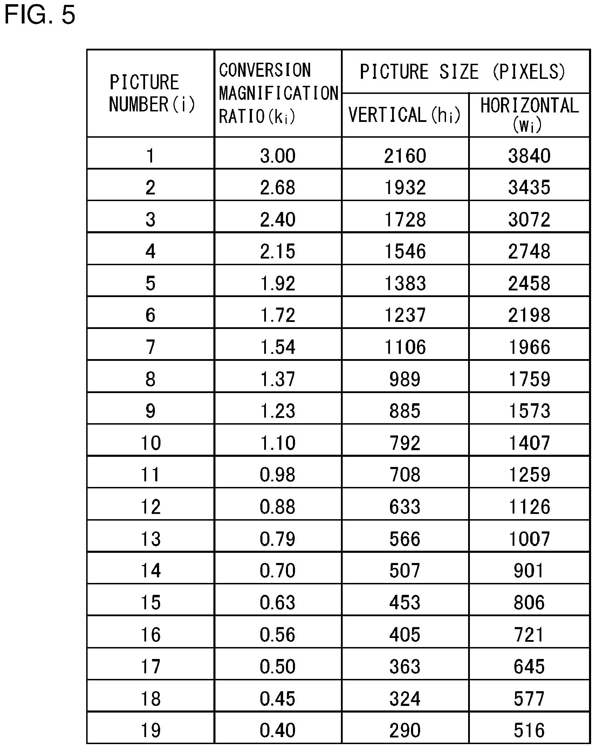

Fig. 5 illustrates a table indicating an example of picture sizes of the plurality of converted pictures 32. Fig. 5 exemplifies a case where the number of the plurality of converted pictures 32 is represented by n = 19, and a picture size in the vertical direction and the horizontal direction of the captured picture 30 is 720 × 1280 (h₀ = 720 pixels, w₀ = 1280 pixels). The conversion magnification ratio kᵢ is set in such a manner as to become a geometric series, and set in such a manner that a geometric ratio r = kᵢ₊₁/kᵢ becomes about 0.9. In the example in Fig. 5, at i = 1 to 10, the conversion magnification ratio kᵢ is set to a value exceeding 1 in such a manner that the captured picture 30 is enlarged. On the other hand, at i = 11 to 19, the conversion magnification ratio kᵢ is set to a value smaller than 1 in such a manner that the captured picture 30 is reduced. Note that specific numerical values of the number n of the plurality of converted pictures 32, the conversion magnification ratio kᵢ, and the picture sizes h₀ and w₀ of the captured picture 30 are not limited to the examples in Fig. 5, and arbitrary values can be appropriately set. In addition, the conversion magnification ratio kᵢ needs not be a geometric series, and may be an arithmetic series. The conversion magnification ratio kᵢ may be defined by an arbitrary numerical sequence changing in value in a stepwise manner in accordance with a number i.

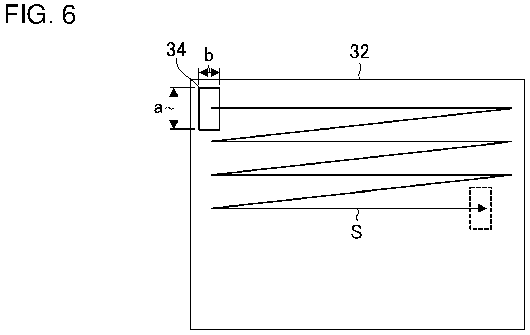

Fig. 6 is a diagram schematically illustrating picture search processing executed by the picture searcher 24. The picture searcher 24 extracts an extracted region 34 being a part of the converted picture 32, and calculates a recognition score indicating a possibility at which a predetermined target object is included in the extracted region 34. The picture searcher 24 calculates a recognition score by picture recognition processing that uses recognition dictionary data. The picture searcher 24 generates a model by reading the recognition dictionary data, inputs picture data of the extracted region 34 to the model, and causes the model to output a recognition score of the input extracted region 34. By sequentially inputting picture data of the extracted region 34 to the model while shifting the position of the extracted region 34 as indicated by an arrow S, the picture searcher 24 calculates recognition scores over the entire region of the converted picture 32.

The shape and the size of the extracted region 34 are defined in accordance with the type of recognition dictionary data. For example, in the case of recognition dictionary data for pedestrians, the shape and the size are defined in such a manner that the extracted region 34 is a rectangle, and a ratio a:b of picture sizes in the vertical direction and the horizontal direction of the extracted region 34 becomes about 2 : 1. In the case of recognition dictionary data for cyclists or for automobiles, the ratio a : b of picture sizes in the vertical direction and the horizontal direction of the extracted region 34 may be a value different from the value set for pedestrians. As picture sizes in the vertical direction and the horizontal direction of the extracted region 34, fixed values are set for each piece of recognition dictionary data. The picture size of the extracted region 34 is identical to a picture size of a learning picture used in machine learning for generating recognition dictionary data, for example.

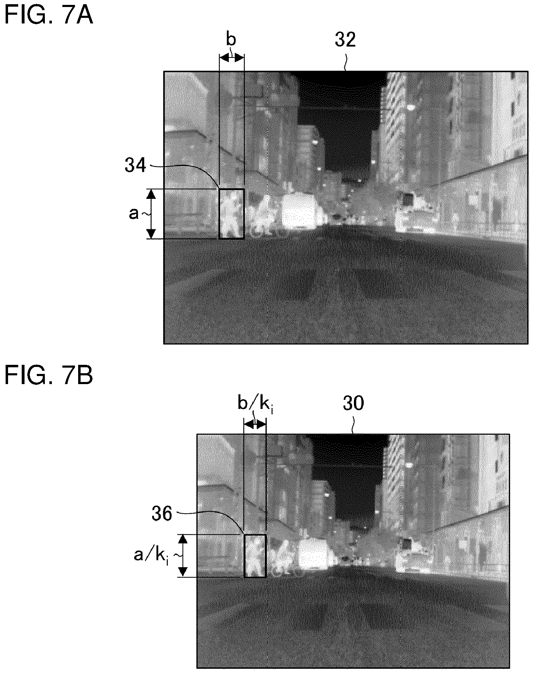

The picture searcher 24 executes picture search processing by extracting the extracted region 34 with a predetermined size a × b set for each piece of recognition dictionary data, from the plurality of converted pictures 32 with different picture sizes. Fig. 7A is a diagram schematically illustrating a picture size a × b of the extracted region 34 in the converted picture 32. In the example in Fig. 7A, a region including the pedestrian 30a in Fig. 2 is regarded as the extracted region 34. Because the converted picture 32 is a picture obtained by enlarging or reducing the original captured picture 30 at the predetermined conversion magnification ratio kᵢ, a size of a search target region that is set when the original captured picture 30 is regarded as a reference becomes a size obtained by reducing or enlarging the extracted region 34 at an inverse number 1/kᵢ of the conversion magnification ratio. Fig. 7B is a diagram schematically illustrating a picture size of a search region 36 in the captured picture 30. As illustrated in the drawing, a picture size of the search region 36 that is set when the captured picture 30 is regarded as a reference is represented by (a/kᵢ) × (b/kᵢ), and becomes a value obtained by dividing the size a × b of the extracted region 34 by the conversion magnification ratio kᵢ. As a result, by executing picture search of the extracted region 34 with the predetermined size a × b from the plurality of converted pictures 32 with different picture sizes, picture search can be executed while changing a picture size of the search region 36 in the captured picture 30. It is accordingly possible to search for target objects with different sizes.

In the present embodiment, a plurality of pieces of recognition dictionary data is prepared for target objects of the same type, and a picture size of the extracted region 34 varies for each piece of recognition dictionary data. For example, in first recognition dictionary data for pedestrians, the picture size of the extracted region 34 is set to a relatively-small picture size, and in second recognition dictionary data for pedestrians, the picture size of the extracted region 34 is set to a relatively-large picture size. For example, the picture size of the extracted region 34 in the first recognition dictionary data for pedestrians is 80 × 40 (a = 80 pixels, b = 40 pixels), and the picture size of the extracted region 34 in the second recognition dictionary data for pedestrians is 160 × 80 (a = 160 pixels, b = 80 pixels). The first recognition dictionary data is used for recognizing a target object picture with a low resolution, and is data for a far distance for mainly detecting a target object positioned in the far distance. On the other hand, the second recognition dictionary data is used for recognizing a target object picture with a high resolution, and is data for a short distance for mainly detecting a target object positioned in the short distance.

The picture searcher 24 executes picture search processing from each of the plurality of converted pictures 32 with different picture sizes using one or more pieces of recognition dictionary data. The picture searcher 24 executes picture search processing from each of the plurality of converted pictures 32 using at least one of the first recognition dictionary data and the second recognition dictionary data. The picture searcher 24 uses either one of the first recognition dictionary data and the second recognition dictionary data depending on whether or not the picture size of the search region 36 that is set when the captured picture 30 is regarded as a reference is larger than or equal to a predetermined threshold value. Specifically, in a case where the picture size of the search region 36 is smaller than the threshold value, the first recognition dictionary data for low resolution. On the other hand, in a case where the picture size of the search region 36 is larger than or equal to the threshold value, the second recognition dictionary data for high resolution is used.

The picture size set as the threshold value can be determined in accordance with the picture size of the extracted region 34 in the first recognition dictionary data and the second recognition dictionary data. The picture size set as the threshold value can be set to a picture size smaller than or equal to four times (smaller than or equal to 320 × 160) of the picture size (for example, 80 × 40) of the extracted region 34 in the first recognition dictionary data, or a picture size smaller than or equal to three times (smaller than or equal to 240 × 120) of the picture size of the extracted region 34, for example. The picture size set as the threshold value can be set to a picture size larger than or equal to the picture size (larger than or equal to 160 × 80, for example) of the extracted region 34 in the second recognition dictionary data, for example. An example of the picture size set as the threshold value is 200 × 100.

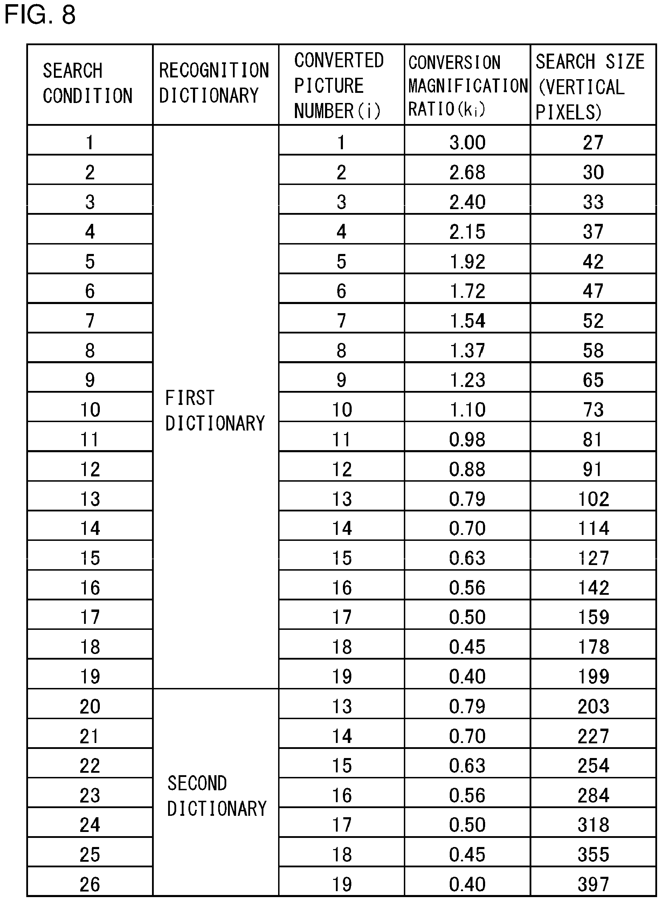

Fig. 8 illustrates a table indicating an example of a search condition of picture search processing. Fig. 8 illustrates, for a plurality of search conditions 1 to 26, recognition dictionary data to be used, a number i of the converted picture 32 to be used, the conversion magnification ratio kᵢ of the converted picture 32, and a picture size (search size) in the vertical direction of the search region 36. Under the search conditions 1 to 19, the first recognition dictionary data for low resolution is used. Because the picture size in the vertical direction of the extracted region 34 in the first recognition dictionary data is 80 pixels, a picture size in the vertical direction of the search region 36 that is set when the captured picture 30 is regarded as a reference under the search conditions 1 to 19 is 80/kᵢ. A search size under the search condition 1 is 27 pixels, and a search size under the search condition 19 is 199 pixels. In this manner, under the search conditions 1 to 19 under which the first recognition dictionary data is used, the search size of the search region 36 becomes smaller than a threshold value (200 pixels).

Under the search conditions 20 to 26 in Fig. 8, the second recognition dictionary data for high resolution is used. Because the picture size in the vertical direction of the extracted region 34 in the second recognition dictionary data is 160 pixels, a picture size in the vertical direction of the search region 36 that is set when the captured picture 30 is regarded as a reference under the search conditions 20 to 26 is 160/kᵢ. A search size under the search condition 20 is 203 pixels, and a search size under the search condition 26 is 397 pixels. In this manner, under the search conditions 20 to 26 under which the second recognition dictionary data is used, the search size of the search region 36 becomes larger than or equal to a threshold value (200 pixels).

The search conditions 1 to 26 in Fig. 8 can also be classified in accordance with the number i (or conversion magnification ratio kᵢ) of the converted picture 32. In a case where the number i of the converted picture 32 is represented by i = 1 to 12, that is to say, in a case where the conversion magnification ratio kᵢ is larger than or equal to a predetermined threshold value (for example, 0.8), picture search processing is executed using only the first recognition dictionary data for low resolution. On the other hand, in a case where the number i of the converted picture 32 is represented by i = 13 to 19, that is to say, in a case where the conversion magnification ratio kᵢ is smaller than a predetermined threshold value (for example, 0.8), picture search processing is executed using both of the first recognition dictionary data for low resolution and the second recognition dictionary data for high resolution.

The picture searcher 24 executes picture search processing based on each of the conditions indicated in the search conditions 1 to 26. By executing picture search processing that is based on all of the search conditions 1 to 26, on the captured picture 30, it is possible to detect target objects with various sizes. In addition, by using a plurality of pieces of recognition dictionary data in which sizes of the extracted region 34 are different, in combination, it is possible to enhance detection accuracy of target objects. In a case where only the first recognition dictionary data is used, when the size of the search region 36 is set to a size larger than or equal to a threshold value, picture search needs to be executed in a state in which the captured picture 30 is reduced excessively (for example, smaller than 1/3 or smaller than 1/4) and a feature amount is lost. This declines recognition accuracy. Similarly, in a case where only the second recognition dictionary data is used, when the size of the search region 36 is set to a size smaller than a threshold value, picture search needs to be executed using a grainy picture obtained by enlarging the captured picture 30 excessively (for example, larger than three times or larger than four times). This declines recognition accuracy. According to the present embodiment, by combining a plurality of pieces of recognition dictionary data, a range of the conversion magnification ratio kᵢ at which the captured picture 30 is enlarged or reduced can be narrowed. In the example in Fig. 8, the conversion magnification ratio kᵢ can be set to a range larger than or equal to 1/3 times and smaller than or equal to three times. As a result, it is possible to prevent a decline in recognition accuracy that is attributed to excessive enlargement or reduction of the captured picture 30.

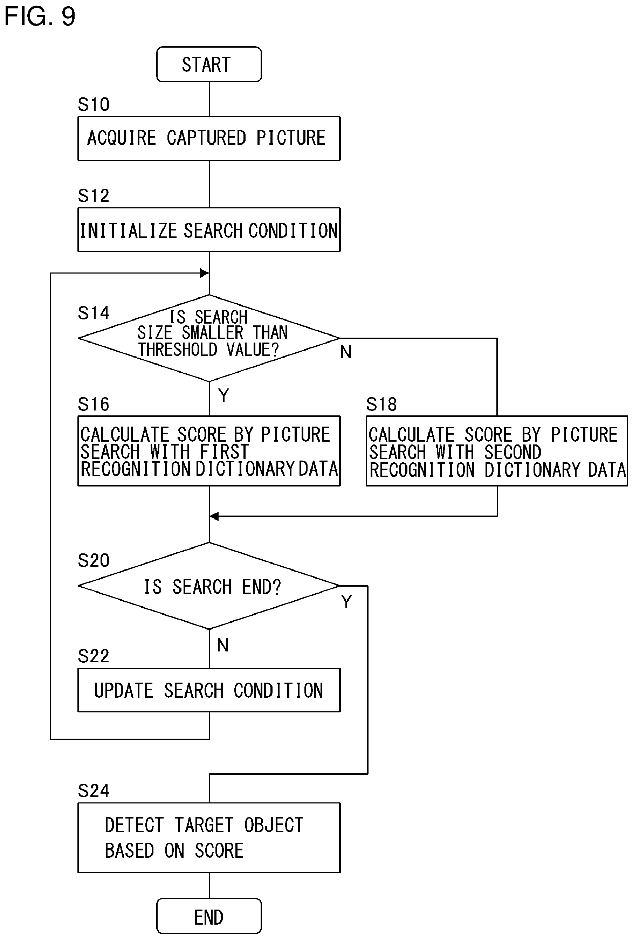

Fig. 9 is a flowchart illustrating a flow of a picture recognition method according to an embodiment. If the captured picture 30 is acquired (S10), a search condition is initialized (S12). If a search size defined by a search condition is smaller than a threshold value (Y in S14), a recognition score is calculated by picture search that uses the first recognition dictionary data (S16). On the other hand, if the search size is larger than or equal to the threshold value (N in S14), a recognition score is calculated by picture search that uses the second recognition dictionary data (S18). If the picture search has not ended (N in S20), the search condition is updated (S22), and processing in steps S14 to S18 is repeated. If the picture search has ended (Y S20), a target object is detected based on the calculated recognition score (S24).

Subsequently, a generation method of recognition dictionary data will be described. In the present embodiment, a plurality of pieces of recognition dictionary data are generated for target objects of the same type. For example, as recognition dictionary data for pedestrians, first recognition dictionary data for low resolution (for a far distance), and the second recognition dictionary data for high resolution (for a short distance) are generated. A plurality of pieces of recognition dictionary data can be generated by making picture sizes of learning pictures to be input to a model used in machine learning, different from each other. For example, in a case where the first recognition dictionary data is to be generated, a learning picture having a picture size smaller than a predetermined value is used as an input. On the other hand, in a case where the second recognition dictionary data is to be generated, a learning picture having a picture size larger than or equal to a predetermined value is used as an input. Here, the picture size of the "predetermined value" that is regarded as a reference is the picture size of the extracted region 34 in the second recognition dictionary data, and is 160 × 80, for example.

A model to be used in machine learning can include an input corresponding to a picture size (the number of pixels) of an input picture, an output for outputting a recognition score, and an intermediate layer connecting the input and the output. The intermediate layer can include a convolution layer, a pooling layer, a fully-connected layer, and the like. The intermediate layer may have a multilayer structure, and may be structured in such a manner that so-called deep learning becomes executable. A model used in machine learning may be constructed using a convolutional neural network (CNN). Note that a model used in machine learning is not limited to the above-described model, and an arbitrary machine learning model may be used.

A model used in machine learning can be implemented by an element or a mechanical device including a CPU or a memory of a computer, from a hardware aspect, and is implemented by a computer program from a software aspect. In this example, a model used in machine learning is illustrated as a functional block implemented by cooperation of these. The one skilled in the art accordingly understands that these functional blocks can be implemented in various forms depending on a combination of hardware and software.

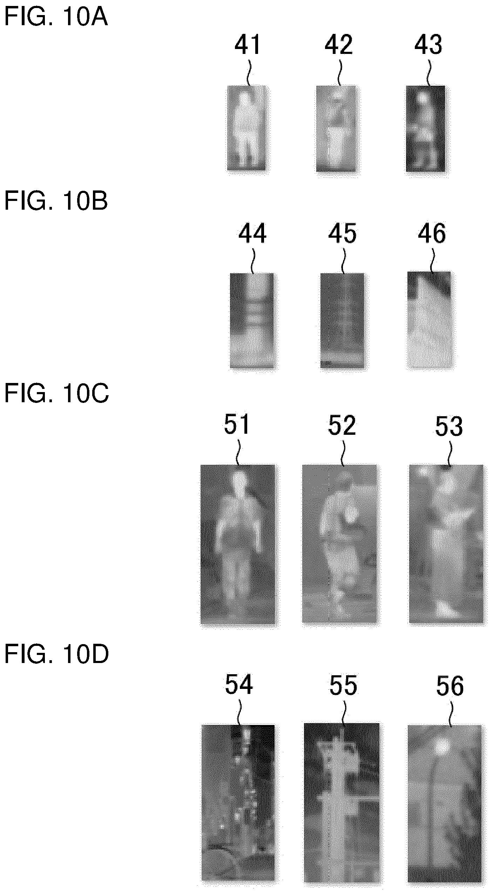

Figs. 10A) to 10D are diagrams illustrating examples of learning pictures, and illustrate examples of learning pictures to be used for generating recognition dictionary data for pedestrians. Figs. 10A and 10B illustrate learning pictures 41 to 46 for generating the first recognition dictionary data, and Figs. 10C and 10D illustrate learning pictures 51 to 56 for generating the second recognition dictionary data. As illustrated in the drawings, the learning pictures 41 to 46 for the first recognition dictionary data have a relatively-small picture size and a relatively-low resolution. An example of a picture size of the learning pictures 41 to 46 for the first recognition dictionary data is 80 × 40. On the other hand, the learning pictures 51 to 56 for the second recognition dictionary data have a relatively-large picture size and a relatively-high resolution. An example of a picture size of the learning pictures 51 to 56 for the second recognition dictionary data is 160 × 80.

As a learning picture, a picture captured by a camera equivalent to the camera 26 in Fig. 1 can be used, and a picture obtained by extracting a partial region of a captured picture can be used. The learning picture may be a picture itself obtained by extracting a partial region of a captured picture, or may be a picture obtained by converting a picture size of the original picture from which the partial region of the captured picture is extracted. The learning picture may be a picture obtained by reducing the original picture from which the partial region of the captured picture is extracted, into an input picture size suitable for a model. An input picture size of a first model for generating the first recognition dictionary data is 80 × 40, for example, and an input picture size of a second model for generating the second recognition dictionary data is 160 × 80, for example. Note that, it is preferable not to use a picture obtained by enlarging the original picture from which the partial region of the captured picture is extracted, as a learning picture. That is, it is preferable not to use a picture with a picture size smaller than an input picture size of a model, as an original picture. In a case where a picture size of an original picture is smaller than an input picture size of a model, the accuracy of machine learning can decline.

In the machine learning for generating recognition dictionary data, supervised learning that inputs positive pictures and negative pictures to a model can be used. The learning pictures 41, 42, and 43 in Fig. 10A are positive pictures for the first recognition dictionary data, and include pedestrians to be recognized. The positive pictures include various pedestrians such as a front-facing pedestrian, a laterally-facing pedestrian, and a rear-facing pedestrian. In a case where positive pictures are input to a model, learning is executed in such a manner that a recognition score output from the model becomes larger (gets closer to 1, for example).

The learning pictures 44, and 45, 46 in Fig. 10B are negative pictures for the first recognition dictionary data, and include target objects that are not pedestrians but are likely to be falsely recognized as pedestrians. The negative pictures include vertically-long building structures and the like, and include a steel tower, a telephone pole, a street lamp, and the like. In a case where negative pictures are input to a model, learning is executed in such a manner that a recognition score output from the model becomes smaller (gets closer to 0, for example).

The same applies to the learning of the second recognition dictionary data. Supervised learning that inputs the positive pictures 51, 52, and 53 in Fig. 10C and the negative pictures 54, 55, and 56 in Fig. 10D to a model can be used. Note that recognition dictionary data may be generated by machine learning that uses only positive pictures, or recognition dictionary data may be generated by unsupervised learning.

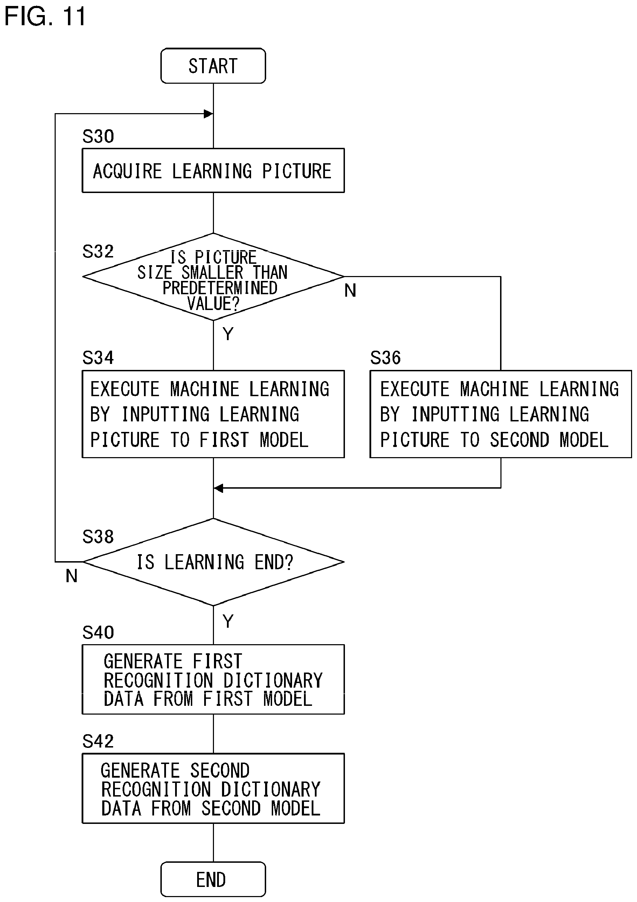

Fig. 11 is a flowchart illustrating a flow of a recognition dictionary generation method according to an embodiment. A learning picture is acquired (S30), and if a picture size of the learning picture is smaller than a predetermined value (Y in S32), machine learning is executed by inputting the learning picture to a first model (S34). If a picture size of the learning picture is larger than or equal to a predetermined value (N in S32), machine learning is executed by inputting the learning picture to a second model (S36). In step S34 or S36, in a case where the picture size of the learning picture is not identical to a picture size to be input to the first model or the second model, the learning picture may be input to the model after converting (reducing, for example) the picture size of the learning picture. The processing in steps S30 to S36 is repeated until the machine learning of the first model and the second model ends (N in S38). In a case where the machine learning ends (Y in S38), the first recognition dictionary data is generated from the first model (S40), and the second recognition dictionary data is generated from the second model (S42). The first recognition dictionary data includes various parameters for constructing a learned first model, for example. The second recognition dictionary data includes various parameters for constructing a learned second model, for example.

According to the present embodiment, it is possible to generate a plurality of pieces of recognition dictionary data in accordance with a picture size of a learning picture. Specifically, it is possible to generate the first recognition dictionary data using a low-resolution learning picture as an input, and generate the second recognition dictionary data using a high-resolution learning picture as an input. As a result, it is possible to prepare the first recognition dictionary data specialized in the recognition of low-resolution pictures, and the second recognition dictionary data specialized in the recognition of high-resolution pictures, and enhance recognition accuracy of target objects with various picture sizes.

Heretofore, the present invention has been described with reference to the above-described embodiment, but the present invention is not limited to the above-described embodiment, and the present invention also includes a configuration obtained by appropriately combining the configurations described in the embodiment, or replacing the configurations.

In the above-described embodiment, the description has been given of a case where the first recognition dictionary data for low resolution and the second recognition dictionary data for high resolution are used as recognition dictionary data for pedestrians. In another embodiment, a plurality of pieces of recognition dictionary data may be used for target objects (cyclists, vehicles, animals, etc.) of a type different from pedestrians. Moreover, while a plurality of pieces of recognition dictionary data is used for target objects (for example, pedestrians or cyclists) of a first type, only a single piece of recognition dictionary data may be used for target objects (for example, vehicles or animals) of a second type.

In the above-described embodiment, the description has been given of a case where picture search processing is executed by generating the converted picture 32 from the captured picture 30 and extracting the extracted region 34 being a partial region of the converted picture 32. In another embodiment, picture search processing may be executed by extracting the search region 36 being a partial region of the captured picture 30, and converting the picture size of the search region 36 into an input picture size of recognition dictionary data. In this case, target objects with various picture sizes may be recognized by changing the picture size of the search region 36 in accordance with the search conditions 1 to 26 in Fig. 8. After executing processing of extracting a partial region of the captured picture 30, the recognition processor 14 may convert the picture size of the partial region in accordance with the conversion magnification ratio kᵢ.

In the above-described embodiment, the description has been given of a case where two pieces of recognition dictionary data are used as a plurality of pieces of recognition dictionary data for target objects of the same type. In another embodiment, three or more pieces of recognition dictionary data may be used for target objects of the same type. For example, three pieces of recognition dictionary data including recognition dictionary data for low resolution, recognition dictionary data for intermediate resolution, and recognition dictionary data for high resolution may be used as recognition dictionary data for pedestrians. In this case, in a case where the picture size of the search region 36 of the captured picture 30 falls within a first range, first recognition dictionary data for low resolution is used, in a case where the picture size of the search region 36 of the captured picture 30 falls within a second range larger than the first range, second recognition dictionary data for intermediate resolution is used, and in a case where the picture size of the search region of the captured picture 30 falls within a third range larger than the second range, third recognition dictionary data for high resolution is used.

In another embodiment, as recognition dictionary data for target objects of the same type, a plurality of pieces of first recognition dictionary data and a plurality of pieces of second recognition dictionary data may be used in combination. The plurality of pieces of first recognition dictionary data are structured to be slightly different in the picture size of the extracted region 34. For example, three pieces of first recognition dictionary data in which picture sizes of the extracted region 34 are 80 × 40, 84 × 42, and 88 × 44 may be used. A difference in the picture size of the extracted region 34 between a plurality of pieces of first recognition dictionary data is about 5%, and is smaller than a difference (100%) in the picture size of the extracted region 34 between the first recognition dictionary data and the second recognition dictionary data. By using a plurality of pieces of first recognition dictionary data slightly different in picture size in this manner, it is possible to enhance accuracy of picture recognition. Similarly, three pieces of second recognition dictionary data in which the picture sizes of the extracted region 34 are 160 × 80, 168 × 84, and 196 × 88 may be used. In this case, a picture size set as a threshold value can be set to a picture size smaller than or equal to four times (smaller than or equal to 320 × 160) of the minimum value (for example, 80 × 40) of the picture size of the extracted region 34 in the plurality of pieces of first recognition dictionary data, or a picture size smaller than or equal to three times (smaller than or equal to 240 × 120) of the minimum value of the picture size of the extracted region 34. In addition, the picture size set as the threshold value can be set to a picture size larger than or equal to the minimum value (larger than or equal to 160 × 80, for example) of the picture size of the extracted region 34 in a plurality of pieces of second recognition dictionary data. An example of the picture size set as the threshold value is 200 × 100.

In the above-described embodiment, the description has been given of a case where picture search processing that uses first recognition dictionary data is executed on all of the plurality of converted pictures 32 (for example, i = 1 to 19), and picture search processing that uses second recognition dictionary data is executed on a part of the plurality of converted pictures 32 (for example, i = 13 to 19). In another embodiment, picture search processing that uses first recognition dictionary data may be executed on a part of the plurality of converted pictures 32 (for example, i = 1 to 17), and picture search processing that uses second recognition dictionary data may be executed on another part of the plurality of converted pictures 32 (for example, i = 11 to 19). For example, a case where the above-described picture size set as the threshold value is set to 160 × 80 is included. In this case, the converted picture 32 (i = 1 to 10) to be subjected to picture search using only the first recognition dictionary data, the converted picture 32 (i = 11 to 17) to be subjected to picture search using both of the first recognition dictionary data and the second recognition dictionary data, and the converted picture 32 (i = 18 to 19) to be subjected to picture search using only the second recognition dictionary data may exist.

In the above-described embodiment, the description has been given of a case where the picture recognition device 10 is mounted on a vehicle. In another embodiment, an installation location of the picture recognition device 10 is not specifically limited, and may be used for an arbitrary intended purpose.

### [INDUSTRIAL APPLICABILITY]

According to the present invention, it is possible to enhance detection accuracy of a target object in picture recognition processing that is based on a recognition dictionary.

### [REFERENCE SIGNS LIST]

10 picture recognition device, 12 picture acquirer, 14 recognition processor, 16 determination processor, 18 outputter, 20 recognition dictionary storage, 22 picture converter, 24 picture searcher, 30 captured picture, 32 converted picture, 34 extracted region, 36 search region

## Claims

1. A picture recognition device comprising:
a picture acquirer configured to acquire a captured picture;
a recognition processor configured to calculate a recognition score indicating a possibility at which a predetermined target object is included in a partial region of the captured picture; and
a determination processor configured to determine whether or not the predetermined target object is included in the captured picture, based on the recognition score calculated by the recognition processor,
wherein, a) in a case where a picture size of the partial region is smaller than a threshold value, the recognition processor calculates a recognition score of the predetermined target object in the partial region using first recognition dictionary data generated by machine learning that sets a picture having a picture size smaller than a predetermined value, as an input picture, and sets a recognition score indicating a possibility at which the predetermined target object is included in an input picture, as an output, and
wherein, b) in a case where a picture size of the partial region is larger than or equal to the threshold value, the recognition processor calculates a recognition score of the predetermined target object in the partial region using second recognition dictionary data generated by machine learning that sets a picture having a picture size larger than or equal to the predetermined value, as an input picture, and sets a recognition score indicating a possibility at which the predetermined target object is included in an input picture, as an output.

2. The picture recognition device according to claim 1, wherein the threshold value is smaller than or equal to four times of a picture size of an input picture to be used in machine learning for generating the first recognition dictionary data, and is larger than or equal to a picture size of an input picture to be used in machine learning for generating the second recognition dictionary data.

3. A picture recognition method comprising:
acquiring a captured picture;
calculating a recognition score indicating a possibility at which a predetermined target object is included in a partial region of the captured picture; and
determining whether or not the predetermined target object is included in the captured picture, based on the calculated recognition score,
wherein, a) in a case where a picture size of the partial region is smaller than a threshold value, the calculating a recognition score calculates a recognition score of the predetermined target object in the partial region using first recognition dictionary data generated by machine learning that sets a picture having a picture size smaller than a predetermined value, as an input picture, and sets a recognition score indicating a possibility at which the predetermined target object is included in an input picture, as an output, and
wherein, b) in a case where a picture size of the partial region is larger than or equal to the threshold value, the calculating a recognition score calculates a recognition score of the predetermined target object in the partial region using second recognition dictionary data generated by machine learning that sets a picture having a picture size larger than or equal to the predetermined value, as an input picture, and sets a recognition score indicating a possibility at which the predetermined target object is included in an input picture, as an output.

4. A program for causing a computer to execute:
acquiring a captured picture;
calculating a recognition score indicating a possibility at which a predetermined target object is included in a partial region of the captured picture,
a) in a case where a picture size of the partial region is smaller than a threshold value, the calculating a recognition score of the predetermined target object in the partial region using first recognition dictionary data generated by machine learning that sets a picture having a picture size smaller than a predetermined value, as an input picture, and sets a recognition score indicating a possibility at which the predetermined target object is included in an input picture, as an output, and
b) in a case where a picture size of the partial region is larger than or equal to the threshold value, the calculating a recognition score of the predetermined target object in the partial region using second recognition dictionary data generated by machine learning that sets a picture having a picture size larger than or equal to the predetermined value, as an input picture, and sets a recognition score indicating a possibility at which the predetermined target object is included in an input picture, as an output; and
determining whether or not the predetermined target object is included in the captured picture, based on the calculated recognition score.

5. A recognition dictionary generation method comprising:
generating first recognition dictionary data by machine learning that sets a picture having a picture size smaller than a predetermined value, as an input picture, and uses a recognition score indicating a possibility at which a predetermined target object is included in an input picture, as an output; and
generating second recognition dictionary data by machine learning that sets a picture having a picture size larger than or equal to the predetermined value, as an input picture, and sets a recognition score indicating a possibility at which the predetermined target object is included in an input picture, as an output.
